(19) Europäisches Patentamt / European Patent Office / Office européen des brevets

(11) **EP 4 160 039 B1**

(12) **EUROPEAN PATENT SPECIFICATION**

(45) Date of publication and mention
of the grant of the patent:
**15.05.2024 Bulletin 2024/20**

(21) Application number: **22198841.3**

(22) Date of filing: **29.09.2022**

(51) International Patent Classification (IPC):
**F16D 25/0635** *(2006.01)*    **F16D 48/06** *(2006.01)*
**F16D 25/063** *(2006.01)*

(52) Cooperative Patent Classification (CPC):
**F16D 25/087; F16D 48/06;** F16D 25/14;
F16D 2300/18; F16D 2500/1026; F16D 2500/1028;
F16D 2500/1045; F16D 2500/3024;
F16D 2500/3026; F16D 2500/5012;
F16D 2500/50257; F16D 2500/70689

(54) **CLUTCH SYSTEM FOR A DRIVE SYSTEM**

KUPPLUNGSSYSTEM FÜR EIN ANTRIEBSSYSTEM

SYSTÈME D'EMBRAYAGE POUR UN SYSTÈME D'ENTRAÎNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.09.2021 NL 2029272**

(43) Date of publication of application:
**05.04.2023 Bulletin 2023/14**

(73) Proprietor: **DAF Trucks N.V.
5643 TW Eindhoven (NL)**

(72) Inventor: **VAN DER KNAAP, Albertus Clemens
Maria
5643 TW Eindhoven (NL)**

(74) Representative: **V.O.
P.O. Box 87930
2508 DH Den Haag (NL)**

(56) References cited:
WO-A1-2017/059856       DE-A1-102007 024 794
DE-A1-102013 201 215    DE-A1-102013 204 831

**Description**

FIELD AND BACKGROUND OF THE INVENTION

The present invention relates to a clutch system for coupling torque of an engine towards a drive system, more in particular, a clutch system for a commercial vehicle such as a heavy duty truck.

Driving comfort optimization in vehicles has always been a point of attention. With clutch systems that are mechanically powered, an aim is here to neutralize any disturbance during coupling action with minimal impact effects, which are in the art known as 'judder', which is perceived as badly damped oscillations, or jerky shocks in the driveline in the engaging action of the clutch system. Such judder, which is unpleasant and impacting economic lifespan of the drive system typically is a phenomenon, where a relative coupling distance of a clutch plate in increasing friction engagement with the clutch disk is controlled insufficiently, so that the coupling engagement or closing of the clutch does not run smoothly. This judder mechanism deteriorates driving comfort and may well be accompanied with the generation of acoustic noise ("squealing of the clutch)".

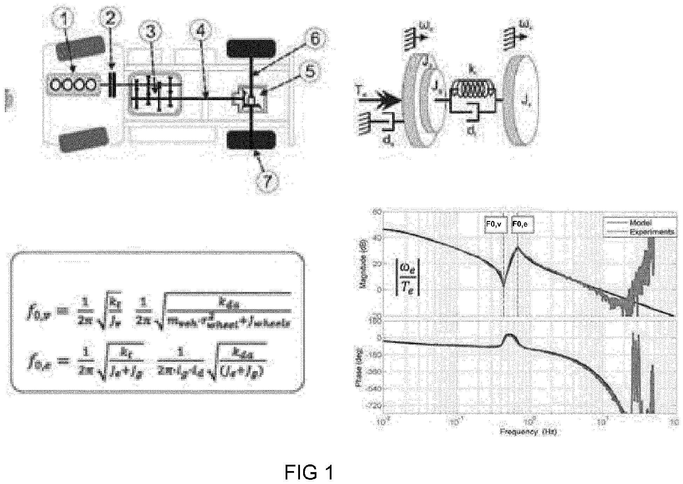

Figure 1 demonstrates this effect in the presence of two eigenfrequencies of the drive system for a clutch in coupled condition. The lowest eigenfrequency is valid for the longitudinal motion of the total vehicle mass:

$$f_{0,v} = \frac{1}{2\pi}\sqrt{\frac{k_t}{J_v}} = \frac{1}{2\pi}\sqrt{\frac{k_{da}}{m_{veh}\cdot r_{wheel}^2 + J_{wheels}}}$$

and the other one valid for the rotation of the engine crank shaft:

$$f_{0,e} = \frac{1}{2\pi}\sqrt{\frac{k_t}{J_e + J_g}} \quad \frac{1}{2\pi \cdot i_g \cdot i_d}\sqrt{\frac{k_{da}}{(J_e + J_g)}}$$

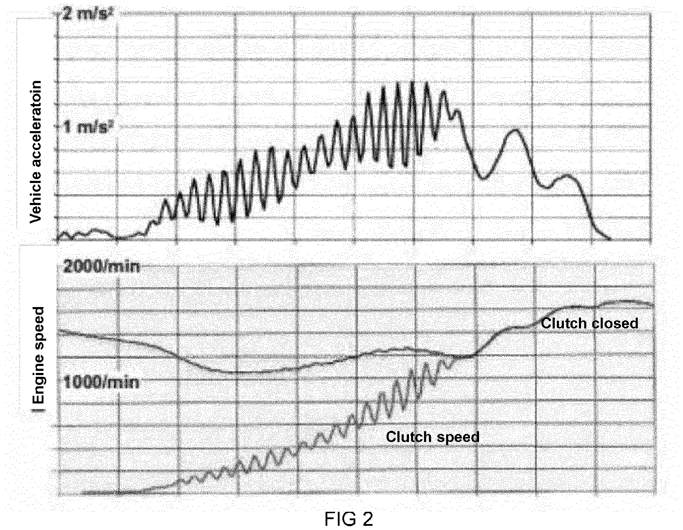

The parameter $k_{da}$ stands for the spring stiffness of the drive axle (specifically dominated by the contribution of the relatively soft thru axle shaft that is part of the driven rear axle connecting the differential gear to the wheels) which is the main parameter to influence the frequency location of these fairly poor damped eigenmodes. The reason for these high attenuations near these typical eigenfrequencies can be explained by of lack of significant damping in the rotating parts of the driveline. This specific damping is indicated with parameters $d_e$ (corresponding to frictional losses in the engine, additional rotating parts of gearbox and also differential gear losses since this component is fairly rigidly coupled to the gearbox output shaft via the relatively stiff propeller shaft) and dt (corresponding to hysteresis effects related to drive axle deflections). Increasing these damping parameters would greatly reduce these unstable vibrations but is not realistic as this puts an unacceptable penalty on fuel consumption. In the battle for having the best fuel economy all dissipative driveline losses are favourably to be reduced to a minimum amount. However, as a consequence of these driveline optimisation measures the location of the resonating eigenmode of the engine and clutch system may shift towards a higher frequency, as a result of down speeding by lowering the differential gear ratio $i_d$ (see also equation above that defines $f_{0,e}$) which involves more energy impact once excited. Also in a slipping condition of the clutch the eigenfrequencies may shift towards higher frequencies, due to partly decoupling the driveline which will lower its moment of inertia. Moreover, also the corresponding vibration attenuation may increase due to reduction of dissipative driveline losses (e.g. lowering oil level in differential to reduce splashing losses and reduction of friction in the numerous driveline bearings), i.e. less damping in the system. Particularly engaging the clutch during low speed manouvring and thus while driving in the lower gears is a delicate cumbersome activity with respect to avoiding excitation of unstable vibrations in the driveline. When the touchpoint of the clutch is not accurately determined and smoothly adjusted by the clutch control system will inevitably lead to driveline shocks during driving off from standstill. For instance when the clutch is closed too rapidly and/or when the contact force on the slipping clutch during engaging is not controlled accurately enough, instability in driveline torque is likely to happen greatly deteriorating the controllability of the vehicle for the driver and reducing the lifetime of the clutch and other surrounding parts in the driveline system. For instance during docking to a warehouse in reverse on a slightly tilted ramp this may become an extremely difficult and hampered task. The clutch control system itself, including a pneumatic actuator, may excite the poorly damped eigenmode of the driveline during the slipping phase of the engaging and disengaging clutch. This delicate excitation and attenuation phenomenon should be avoided as it impacts vulnerable driveline components and may be jeopardizing the smooth and precise controllability of the vehicle for the driver. This effect is, as an example shown in Figure 2, wherein clutch judder is translated in jerky vehicle acceleration, while the clutch becomes fully closed and the engine speed is translated into vehicle speed.

In conventional clutch systems, it is known that a touchpoint can shift during the economic lifespan of the system, e.g. by wear of mechanical parts or the clutch disk/plate system. The actuator stroke distance to touchpoint can change in order to initiate engaging of the clutch disk, so that the actuator control logic needs to be updated in order to provide smooth drive off. Also an increase of clutch disk temperature (related to accumulation of slipping energy during repetitive engaging and disengaging actions whilst transmitting engine torque, specifically during low speed manouvring) may cause the thickness of the clutch plate to expand, so that less actuator stroke is needed to touch the clutch plate. In a worst case scenario, a touchpoint parameter in the software of the clutch control ECU may not correspond at all with a real friction 'starting point', resulting in jerky behavior. Also, when the control software assumes an earlier touchpoint location than the real friction 'starting point', an initial absence of system driveline reaction may stimulate the driver to push harder on the

pedals and the control system to close the clutch faster. Once the real friction 'starting point' is being crossed (at significant clutch actuator speed) an unstable driveline shock or clutch judder will be the result.

In a conventional setpoint analysis, typically, a touchpoint is calculated by having slowly engaging coupling contact in order to extrapolate a touchpoint, i.e. coming from an open, decoupled condition to a semi-closed condition, as can be learned e.g. from EP0787923, DE102013204831, WO2017059856, DE102013201215 or DE 102007024794. However, touchpoints that are identified in that way may not fully identify a true touchpoint, e.g. by wear patterns that are formed on a clutch disk, which will still give rise to undetermined judder.

The invention has as an object to provide a clutch system that has a smooth and high precision control of the clutch arrangement, in order to neutralize any coupling disturbances during coupling engagement of the clutch system and which provides for a robust and sufficiently durable design, specifically improvement of lifetime and control accuracy of the clutch system and engine and drive system that is powered by the engine.

SUMMARY OF THE INVENTION

The invention aims for adding a pneumatic pressure sensor to the control set up of a clutch control system. According to an aspect of the invention a clutch system for coupling torque of an engine towards a drive system is provided. The clutch system comprises a pressurizable clutch arrangement comprising: a clutch disk and clutch plate to be coupled for transmitting the drive torque from the engine towards the drive system, and a pneumatic clutch actuator system for actuating the clutch plate in and out of coupling engagement with the clutch disk; said pneumatic actuator system having a working stroke that, upon pressure release, is arranged to control a relative coupling distance of the clutch plate in increasing friction engagement with the clutch disk, until, in fully released condition, the clutch disk is fully coupled to the clutch plate. A pressure supply mechanism is further provided for pressuring the clutch arrangement, in order to couple the clutch arrangement; and a pneumatic pressure sensor, for sensing a working pressure of the clutch arrangement, during the working stroke. A controller is provided for controlling actuation of the pneumatic clutch actuator system. The controller is provided with a calculation module, that calculates one or more touchpoints of the friction engagement based on sensed working pressures of the pneumatic pressure sensor during the working stroke. A touchpoint is calculated from a mean pressure value derived from an inner contour of sensed pressures in the coupling and decoupling working strokes.

While it is not unseen that in some prior art arrangements a pressure sensor may be included in a pressurizable clutch arrangement, e.g. for detection of malfunction, in contrast, according the invention, a working pressure is measured during the working stroke in order to provide a reliable touchpoint determination, in particular during measurements of both coupling and decoupling working strokes. The benefit thereof is that a setpoint can be updated based on pressure measurements during the entire clutch cycle, on a continuous basis, which substantially improves a reliability of a touchpoint analysis.

Accordingly the control system can be enhanced by actively compensating for the friction forces acting on the actuator displacement. As a result the accuracy and bandwidth of the clutch control system will be improved which may additionally allow for stable dampening feedback control of the driveline rotation dynamics during the slipping phase of the engaging and disengaging clutch.

According to the invention, a smooth continuous operation can thus be achieved without complexity since the pressure set parameters according to this arrangement can directly control the mechanical force dynamics required for the pressurizable clutch arrangement. Further areas of applicability of the present systems and methods will become apparent from the detailed description provided hereinafter. It should be understood that the detailed description and specific examples, while indicating exemplary embodiments of the displays and methods, are intended for purposes of illustration only and are not intended to limit the scope of the invention.

BRIEF DESCRIPTION OF THE DRAWINGS

These and other features, aspects, and advantages of the apparatus, systems and methods of the present invention will become better understood from the following description, appended claims, and accompanying drawing wherein:

Figure 1 shows a schematic system setup of an engine, clutch and driveline components, and the frequency response behavior thereof;
Figure 2 shows an exemplary graph of judder excitations while the clutch is engaged to a driveline;
Figure 3 shows an exemplary clutch system having a controller according to an aspect of the invention;
Figure 4 shows a conventional touch point graph;
Figure 5 shows a touch point analysis according to an aspect of the invention;
Figure 6 maps the sensed pressure signals to a calculated friction force;
Figure 7A shows the conventional control principle in an exemplary control scheme;
Figure 7B shows the inventive control principle in an exemplary control scheme;

DETAILED DESCRIPTION

The following description of certain exemplary embodiments is merely exemplary in nature and is in no way intended to limit the invention, its application, or uses. In the following detailed description of embodiments of the present systems, devices and methods, reference is made to the accompanying drawings which form a part hereof, and in which are shown by way of illustration specific embodiments in which the described devices and methods may be practiced. These embodiments are described in sufficient detail to enable those skilled in the art to practice the presently disclosed systems and methods, and it is to be understood that other embodiments may be utilized and that structural and logical changes may be made without departing from the spirit and scope of the present system.

The following detailed description is therefore not to be taken in a limiting sense, and the scope of the present system is defined only by the appended claims. The leading digit(s) of the reference numbers in the figures herein typically correspond to the figure number, with the exception that identical components which appear in multiple figures are identified by the same reference numbers. Moreover, for the purpose of clarity, detailed descriptions of well-known devices, circuits, and methods are omitted so as not to obscure the description of the present system.

The invention aims for adding a pneumatic pressure sensor to the control set up of the clutch control system in addition to a position sensing system. By evaluating both coupling and decoupling working strokes in a touchpoint determination algorithm touch point control can be made less sensitive to any frictional forces (originating from seals and guiding bearings) acting on the clutch actuator device. Note that in the state-of-the-art touch point determination and corresponding adjustment of the clutch is typically carried out in one-way closing direction (avoiding any small intermediate reverses) in order to approach the clutch disk via the upper friction force branch which offsets the real friction 'starting point' of the clutch disk. Ultimately clutch control as herein disclosed may enable to actively compensate friction forces acting on the actuator displacement during coupling engagement. As a result accuracy and bandwidth of the clutch control system can be improved allowing for stable dampening feedback control of the driveline rotation dynamics during the slipping phase of the engaging and disengaging clutch.

It is the objective of this invention to improve the control accuracy and bandwidth of pneumatically actuated clutch control systems to suppress annoying driveline vibrations during the slipping phase (opening and closing) of the clutch via the application of a pressure sensor. The pressure sensor signal may used as measurement signal for feedback control of the pneumatic actuator pressure, as well as to apply a control valve setpoint feed-forward loop based on knowledge from gas law ($p \times V = m \times R \times T$) and the pneumatic orifice equation (gas discharge formula) for swiftly and smoothly reacting to desired slipping torque commands from the master control system. Furthermore an additional friction compensation control loop is applied making use of measurement data that is gathered by the pressure sensor in order to improve the actual positioning accuracy of the pneumatic actuator. The proposed sensor solution (hardware) as well as the basics of the control algorithm (software) improvements shall be explained in more depth hereafter.

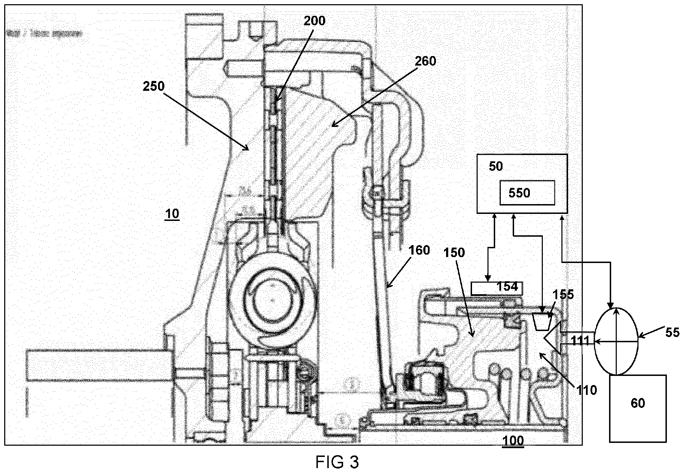

In a typical clutch system 10, e.g. as shown in Figure 3 an amount of air is pumped into an actuator chamber 110 of a pressurizable clutch actuator system 100, and more specifically, an amount of air exchange per time unit ("pressure gradients"), is controlled via a set of valves (not shown), which may be staged. E.g. a set of valves 55 may be situated between the actuator working chamber 110 and a vehicles central air supply system 60, which is an air buffer being controlled e.g. by an air-compressor at supply levels typically ranging between 9 and 12 bar. E.g. two valves may differ in size (one with a small orifice and one with a big opening orifice), which combination may accordingly be controlled, by controller 50, to have effective opening ports between these connective position points in an air supply channel 111. The highest pressure build-up gradient is realised when both valves 55 are opened and the smallest gradient is actuated when only the valve with the smallest orifice is being opened and the other valve remains closed. In a practical setup, up to four combinations for these two valves may be adjusted which may be done via so-called "Pulse Width Modulation" (PWM) control techniques of the electrical current in the valves 55 which may be driven by solenoids. Alternatively also "Frequency Modulation" techniques may be applied. The same description applies for letting air out of the working chamber and consequently reducing actuator pressure in actuator chamber 100 (resulting in a retraction of the piston) using further one or more control valves that may situated between the actuator and an ambient air release connection port (not shown in the Figure). These further control valves may be also part of valve system 55 in order to release air from the working chamber thus to control pressure build-offs and are normally closed when a pressure build-up is actuated. The actual position of the piston 150 is preferably but not essentially, controlled using measurement information, e.g. from a (high resolution) digital contactless translation sensor device 154 that may be mounted in parallel at the outer tube of the pressure clutch actuator system 100. For the purpose of engaging and disengaging of the clutch, the position of the piston 150 may be varied in accordance with the translation sensor signal 154. The actuator is used to deform the central clutch diaphragm spring 160 and thus vary the clamping force $F_{clutch}$ acting on the actual clutch pressure plate 260.

In the present embodiment the piston 150 is ring shaped in the form of plunger with an inner and outer diameter. This piston 150 (or plunger) moves along an inner and outer guiding tube and is acting against the inner lips of a diaphragm spring 160 via a release roller bearing to allow for a relative rotation speed difference between the diaphragm spring (which is fixed to the engine flywheel 250 via the clutch group housing) and the nonrotating actuator piston. The clutch 10 may thus be decoupled by the actuator 100. The more air is pumped into the working chamber 110, the higher the pneumatic pressure will rise and the harder the piston 150 is forced into the diaphragm spring 160. As a consequence the piston 150 is travelling in elongation direction of the pneumatic actuator 100. Typically, an effective control stroke ranges between 5 and 10 mm, dependent on the mechanical design constraints and integrated stiffness characteristics of the multiple components in the total clutch system assembly. For decoupling purpose the piston 150 moves against the inner points of the concentric lips of diaphragm spring 150, by way of example, consequently bending these lips in the direction of the flywheel 250. Preferably this part of the spring system exhibits an strongly linear relationship with a stiffness value that typically ranges between 1000 N/mm and 2500 N/mm. To avoid a discontinuity in the force being built up at the clutch disk 200 when the clutch pressure plate 260 gets in first contact with the clutch disk 200, called "touch point", in addition, preferably, a so-called cushion spring, formed by a number of waveform plate leaf springs, may be integrated in the clutch disk 200 itself, that may have a non-linear progressive spring characteristic and which can be considered to be placed in series with the linear spring related to bending of the lips in the diaphragm spring. As a result the cushion spring may aid to a smooth, gentle and continuous rise of the force being build up in the clutch when it crosses the delicate "touch point" region of the slipping clutch. The clutch system assembly may be formed by a flywheel 250, that stabilizes the engine rotation, the actual clutch disk 200 itself and the actuated clutch pressure plate 260.

The translation of piston 150 may thus form a strong indication for clutch clamping force, basing on the assumption that the bending of the lips of diaphragm spring 160 have a rather linear force-displacement characteristic. In this sense the soft part of the progressive cushion springs in the clutch plate have an adverse effect on clutch force control accuracy in this delicate touch point control zone however. Also the touch point position learning routine is more cumbersome due to this effect as no distinct force raise (i.e. a change from zero into a specific gradient) can be recognised in this touch point area to identify an inflection point in the force. Furthermore, achieving delicate smooth "back-and-forth" displacement actuation (specifically at 0,1 mm level or even less) that is typically needed for robust and accurate control during the slipping phase of an engaging clutch, may be hampered by any friction forces that counteract the piston 150. As a matter of fact, a small increase or decrease of working chamber pressure may not result in a piston displacement as long as the actuator 100 is blocked in its motion by a static friction threshold.

Furthermore the touch point may vary as a function of temperature and lifetime or wear. Increasing temperatures results in the tendency of the thickness of the clutch plate to expand, consequently resulting in an earlier touch point location when the clutch actuator is reversed backwards to engage the clutch to coupling position. When this effect is not properly recognized by the control software, jerky or unsmooth drive-off is likely to happen. In contrast to this temperature effect, clutch wear over lifetime has the tendency of the clutch disk thickness to reduce, resulting in a shift of the touch point in the other direction. When this effect is not properly recognized by the control software, the result would be a delayed driveline (and/or gear shift) response which reduces the predictability of the vehicle reaction for the driver on pedal inputs. Over-compensation by the driver to deal with delayed response may give rise to too fast actuated piston speeds and once the touch point is crossed again, a sudden shock in the driveline is likely to happen with judder as a result.

The relationship between transmitted clutch slipping torque $M_{slip}$ and clutch clamping force $F_{clutch}$ reads:

$$M_{slip} = 2\mu \times F_{clutch} \times R_{clutch}$$

Where $R_{clutch}$ refers to the effective clutch disk radius and where the resulting tangential clutch frictional (slipping) force acts on. The parameter mu ($\mu$) refers to the actual dynamic friction coefficient, that is dependent on actual slipping speed and temperature, from the friction pads that are embedded on both sides of the clutch disk 200. The factor of 2 can be understood by considering the fact that the clutch clamping force is acting on both sides (in parallel) of the clutch disk. For state-of-the-art bio-organic friction materials a static friction coefficient typically ranges between 0,3 and 0,6.

Once the clutch is fully closed, a maximum engine torque (may typically range between 2000 and 3500 Nm) which is transmitted via the clutch disk 200 towards the further drive system, i.e. driven rear wheels without any slip occurring (traction torque < static friction torque). In this fully engaged stage of the clutch, the controlled clutch closing force $F_{clutch}$ reaches its maximum value (typically ranging between 20 kN and 35 kN). In this situation the clutch pressure plate 260 is firmly pressed against the clutch disk 200 that on his turn may be forced against a flywheel 250 that is directly fixed to the output shaft of the engine shaft. In the shown embodiment, a clutch system 10 is disclosed for coupling torque of an engine towards a drive system. The embodiment is provided with a pressurizable clutch arrangement comprising: a clutch pressure plate 260 and clutch disk 200 to be coupled for transmitting the drive torque from an engine towards a drive system. A clutch actuator system 100 is provided for actuating the clutch plate 260 in and out of coupling engagement with the clutch disk 200.

The actuator system 100 has a working stroke that, upon pressure release, is arranged to control a relative coupling distance of the clutch pressure plate 260 in increasing friction engagement with the clutch disk 200, until, in fully released pressure condition, the clutch disk 200 is fully coupled to and clamped in between the flywheel 250 of the engine clutch pressure plate 260. A pressure supply mechanism consisting of e.g. solenoid valves 55 and an air supply buffer 60 is provided for pressuring the clutch arrangement, in order to couple the clutch arrangement into a coupling engagement of clutch disk 200 and clutch plate 260. A pressure sensor 155 senses a working pressure of the clutch arrangement 10, during the working stroke; and a controller 50, controls said pressure supply mechanism to actuate the piston to a touchpoint based on the sensed pressure and measured actuator displacement using position sensor 154.

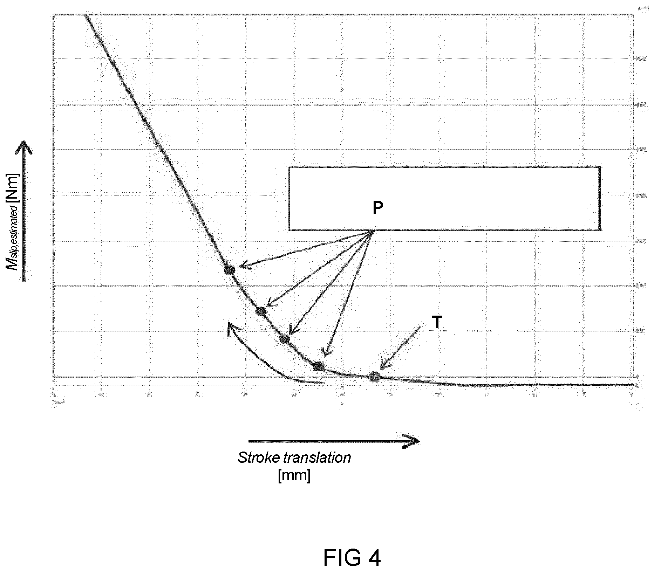

Determination of the touchpoint based on the pressure sensor is a unique aspect of the invention. For better understanding it, in Figure 4, first a touch point learning routine is illustrated according to a conventional principle. In the Figure, multiple calibration points are identified in a friction torque curve, that is learned in a designated routine. Every time the vehicle is at standstill (e.g. waiting at traffic lights, stop-and-go, etc...), system checks are being carried out and clutch temperature is being monitored, whilst this important learning routine is being carried out allowing the overall clutch control system to dynamically adapt to changing hardware conditions. The state-of-the-art of this learning routine is typically based on the following consecutive steps:

1. The vehicle comes to a stop and the engine is rotating at idling speed.

2. The gearbox transmission is set to neutral gear, disconnecting it from the rear wheels.

3. The clutch is being fully disengaged by the clutch actuator and the input shaft of the gearbox is being brought to standstill (zero speed) via activation of the transmission brake that is connected to one of the lay shafts of the gearbox.

4. From this point on multiple short distance closing displacements, shortly passing beyond the presumed touch point of the clutch in the delicate non-linear touch point region, are being carried out by the clutch actuator.

5. These actuations will trigger the clutch, and all other rotating parts that are connected to the input shaft of the gearbox, to accelerate.

6. Multiplication of these measured accelerations (derived from a speed sensor signal that measures the input shaft speed) with the effective mass moment of inertia of clutch disk and input shaft, delivers an estimation of actual slipping torque, also capturing the influence of the (dynamic) friction coefficient.

7. These estimated acceleration torques are related to the corresponding positions of the clutch actuator and put into a register of the software to be used as dynamically adapting feed forward loop that is applied in a master controller to generate set points for the position control system of the clutch actuator system.

The shape of the curve with its smooth curvature in the touch point region is clearly seen in the Figure and also visible are up to four calibration points P and the estimated location of the touch point T. These points are fitted and extrapolated by the software routine. This clutch touch point curve information is important, for a conventional touch point learning routine to control the clutch in a manner that a sufficiently fast and smooth closing response, in one way direction, is achieved and that the risk on initiation clutch judder is minimized. Since the vehicle is in standstill, the only option is identifying the friction in a closing action of the clutch, with the gearbox in neutral, which offers a limited set of datapoints to identify a 'true' touchpoint. Clearly, in the conventional touchpoint routine, no pressure sensor is used.

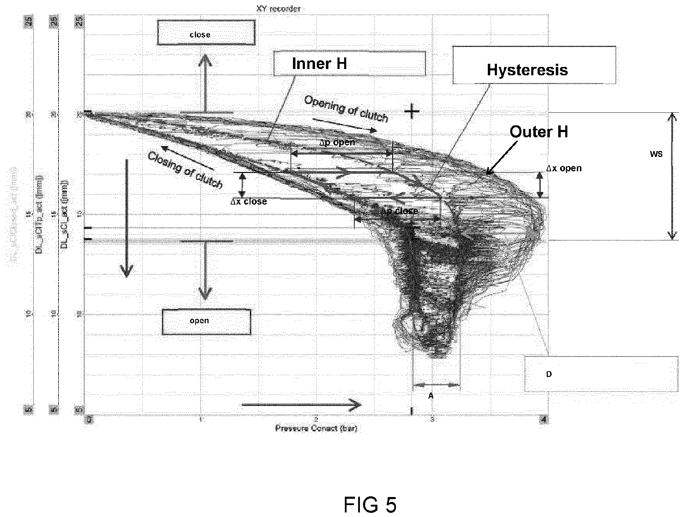

Figure 5 shows a touch point analysis according to an aspect of the invention, wherein according to the inventive principle controller 50 is provided with a calculation module, that calculates one or more touchpoints of the friction engagement based on sensed working pressures of the pressure sensor during the working stroke, which may typically vary between 5 and 15 mm, in the example 7 mm. To obtain the shown graph a translation sensor is provided that measures a stroke translation of the working stroke, and the controller 50 calculates a touchpoint by relating a sensed stroke translation to a sensed working pressure. Thus, a measured pneumatic actuator pressure is plotted on the horizontal axis and the measured actuator position is plotted on the vertical axis. The diagram thus shows a working stroke WS, in a diagram that plots the sensed pressures in the working chamber, sensed by pressure sensor 155, as a function of stroke translation, sensed by translation sensor 154. The measured pressure values cycle on a hysteresis curve that is dependent on the closing or opening action of the clutch. A working pressure ranges between 0 and approximately 3 bar. Beyond these strokes the clutch is fully opened or closed. In the graph, a difference can be made by a 'true' friction hysteresis, and dynamic effects, that may increase the pressure values, if a piston moves very fast (typically related to decoupling actions), or quick in order to react to swiftly changing control commands from the master controller and simultaneously conquering dynamic resistance forces relating to damping and mass acceleration forces or jerkily in case of unstable vibrations.

This dynamical behaviour corresponds to an outer hysteresis contour Outer H. The measurements show also a pronounced inner hysteresis contour Inner H. This Inner H hysteresis can be considered to be the true (static) friction characteristics, valid for the low speed piston motions that are contained in the recorded measurement data. This friction hysteresis is for a major part caused by the friction of the mechanical dynamics of the actuator system 10. For example, parasitic dissipative losses acting in the contact points of the diaphragm spring can be recorded by these pressure measurements. The true friction hysteresis can be thus identified by an inner contour in the pressure map of sensed pressures in a working stroke. For instance, the contact points of the lips of the diaphragm spring need to slide radially over the contact surface of the contact roller bearing for changing actuator positions which coincides with frictional losses. Also the micro motion around the contact point of fulcrum ring and the contact point at the clutch pressure plate may generate friction. Furthermore a clutch disk may be moving over axial splines in its connection with the gearbox input shaft (not shown in Figure 3) that allows for a crucial degree of freedom for the cushion springs in the clutch disk to breathe. Consequently the cushion springs are compressed and decompressed adding up to increased actuator motions and forces. This all may add up to a total resulting friction hysteresis characteristic that can perfectly be recorded with a simple pressure sensor, even if the conditions are changing over time, temperature, humidity, dust, etc....

Evaluating the true friction hysteresis curve (Inner H) one clearly recognizes the pressure dependency which for a significant part may be caused by the servo-effect that is integrated in piston seals of the actuator system 10. Pressure/translation values that form the Inner H curve can be selected, in one embodiment, to calculate a mean pressure value from coupling and decoupling working strokes that have a stroke velocity below a set velocity limit in order to identify this true friction hysteresis curve. With a low stroke speed a more accurate and reproducible mean pressure value can be derived from the Inner H curve, wherein velocity dependent friction effects can be ignored, which is especially important for a pneumatic actuator, which may have a higher variability in sensed pressures than a hydraulic actuator. In addition, also setpoints may be selected where a stroke acceleration is limited, in particular removing the pressure points wherein a sensed acceleration exceeds a maximal allowed threshold for evaluation or otherwise identifying an inner curve in the map of sensed pressures.

Thus, by excluding measurement samples obtained during rapid variations of the clutch, disturbances can be discarded. The higher the pressure is, the higher the friction hysteresis is. At zero pressure (when the clutch is fully closed) this results in fairly low hysteresis (close to zero), but at maximum adjustment pressure, typically ranging between 2,5 and 3,5 bar, the hysteresis reaches a considerable value of approximately 0,4 bar which corresponds, in the example, to about 13 % of the total actuation pressure range. This may be considered as a significant disturbance factor. It is observed that the highest friction forces occur in the sensitive touch point region of clutch engagement. It is further noted, that in this pressure graph, no control is present still, and the pressure values are measured as initiated by the conventional control system. In particular, indicative information on the amount of friction is not present using information from a position sensor. The conventional control system in this case includes a feed forward estimate for a gas volume amount and/or delta pneumatic pressure required (by correlating it to the desired displacement direction), but this could well be accompanied with an overshoot once breaking the piston loose in the reverse direction, which may result in a driveline shock followed by judder. Not including this delta pressure may prevent this, but but will go at the cost of a sluggish and very slow response (it is noted that the position controller needs to be deliberately tuned to slow build-up of pressure in the working during engaging in the touchpoint region) and a temporary standstill of the actuator which can also be considered as discontinuity that may excite the judder phenomenon. As a consequence the objective for the sensed conventional closing strategy is to smoothly close in one continuous direction by heavily relying on a properly learned feed forward closing curve (along the upper boundary of the friction hysteresis curve) and avoid any pronounced feedback reverse action by selecting fairly low position error feedback gains.

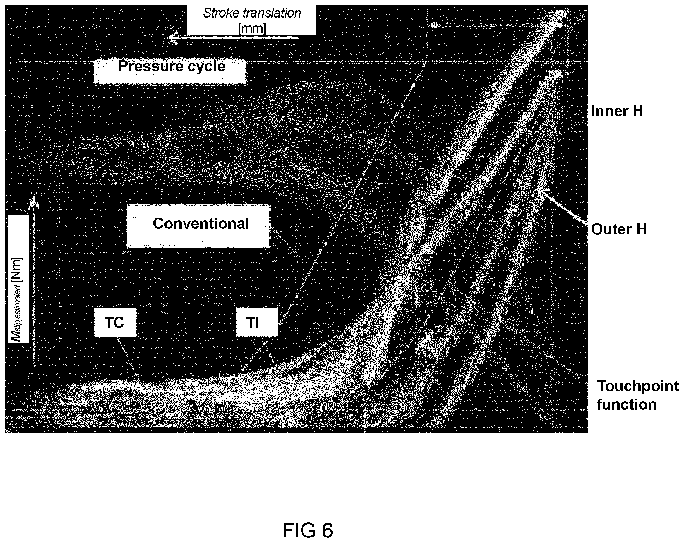

Figure 6 iterates on Figure 5 with sensed pressure values in a calculation of one or more touchpoints of the friction engagement based on sensed working pressures of the pressure sensor during the working stroke. In particular, here, a touchpoint function is derived by a calculation module 550. This touchpoint function is derived by analysing the pressure values, preferably, by measuring a stroke translation of the working stroke, and calculating a touchpoint by relating a sensed stroke translation to a sensed working pressure.

In particular, calculation module 550 can be programmed to calculate a touchpoint function that calculates the touchpoint as a function of sensed working pressure. Furthermore, the calculation module may update the touchpoint function during coupling and decoupling of the clutch actuator system. This may even be carried out during normal activity of the engine, and does not necessarily require a specific learning cycle as discussed here above, which may require set conditions that are not easily available. Furthermore, the sensed stroke translation and working pressure can be measured in both coupling and decoupling working strokes. This is a substantially different concept than the extrapolation routine of the conventional touch point analysis, which can only rely on a few calibration points close to the touch point, where the 'closeness' may still substantially deviate from a real touch point in practice.

There may be several implementation routines to provide a practical control for the touch point, which may also be optimized for a specific type of clutch system. For example, a touchpoint may be calculated from a mean pressure value derived from the coupling and decoupling working strokes. By 'mean' it can be meant that an arithmetic means is used of two pressure values sensed in both engaging and disengaging cycles, for a particular stroke translation. But, depending on implementation, also other mathematical relationships may be used without departing from the scope of the invention. For example, a mean pressure value may be derived for respective designated stroke translations, in particular, the same stroke translation. A mapping between sensed working pressure values and a modelled friction force may further optimize a touchpoint function calculation. For example, a mean pressure value may be derived from respective designated relative friction force values, calculated from the stroke translation. Furthermore it is noted that this proposed solution may be used in addition to another method of touchpoint learning e.g. for the sake of independent plausibility checks (e.g. during vehicle stops). Relevant for maximizing robustness, particularly in relation to influence of changing friction coefficient of the clutch disk which cannot be captured by the pressure sensor (fixed assumption, based on testing, needed to calculate the estimated clutch slipping torque).

In calculating a (modelled) friction force, by way of indication, Figure 6 maps the sensed pressure signals to a calculated slipping torque, that is, to identify the relation between transmissible clutch (slipping) torque and clutch actuator position. On the basis of the measured pressure signal an actual clutch contact force and maximum transmissible slipping torque (by incorporating the friction coefficient of the friction pad) can be estimated using the following formulas:

**Formulas**

$$M_{slip} = 2\mu \times F_{clutch} \times R_{clutch}$$

$$F_{clutch} = F_{fulcrum,0} - (a/b) \times F_{actuator} = A_{piston} \times p_{actuator}$$

**Parameters**

Ffulcrum, 0 = 26000 N
a/b = 3,52
$\mu$ = 0,42
$R_{clutch}$ = 0,176 m
$A_{piston}$ = 2391 N/bar

Where $R_{clutch}$ reads the effective clutch radius and $A_{piston}$ denotes the effective piston area where the working chamber pressure acts on. The result of this computation is plotted in the drawing. These parameters are given just by way of example since for a practical embodiment these can be determined using straightforward mechanical calculations, to extrapolate a friction force from an exerted pressure.

For example, the relationship between actuator position and clutch torque can be computed by determining a middle value between lower and upper parts of the resulting hysteresis curve, when it is assumed that the friction threshold is symmetrical for contraction as well as expansion of the actuator. The result of determination refers to the solid touchpoint function line in the graph. It was found that this Touchpoint function curve derived from the pressure sensor coincides perfectly to construction information of the multiple springs and transmission ratios that are present in in the clutch system assembly and provides, after a possible calibration step, an excellent match over the entire operating range of the actuator. This estimated characteristic can also be separately measured and proven on a dedicated test bench setup. Hence, the pressure sensor is an excellent additional information source to learn the touch point position TI and the shape of the curvature in the delicate touch point region. Furthermore, these curves may even be recorded whilst normal driving without a need for waiting on the next vehicle stop. In this manner much more calibration points can be fitted (and more often). Moreover, not only during closing, but also during opening indicative information on this vital feed forward curve can be captured, greatly enhancing the quality, robustness and repeatability of this part of the clutch control system. It is shown that not only the conventional touch point TC, as well as the conventional touchpoint function may significantly deviate from the newly found touch point TI. This is particularly likely to be the case for clutch learning procedures of the conventional touch point determination method for clutches with a polluted spline which is inevitable the case over time (vehicles with high mileage). To allow the cushion springs to breathe (in the touch point region) the clutch disk axial splines needs to allow free axial movement of the clutch disk over the gear box input shaft. To minimize the resistance to this axial clutch motion the splines needs to be greased and preferably maintained in periodic service intervals at the dealers. Especially when the mileage of the vehicles is high and the system components are getting older, this grease starts to dry out and the splines are getting contaminated with dirt, originating from abrasive wear of the clutch friction plates. As a result, friction increases, with all risks that this entails for implementing a robust control of the clamping force in the low torque slipping range of the engaging clutch. Especially maneuvering at a slope (typical for docking at ware house) is a critical use case in this respect. When the vehicle is standing still, the clutch will be fully opened (in the conventional method) and the clutch pressure plate needs to be lifted backwards down the input shaft of the gearbox. Now, with the help of gravity and typical mechanical vibrations originating from the rotating engine and the gearbox itself on its rubber bushings, the clutch plate will also gradually move backwards over the spline and come to a standstill when it touches the backwards lifted pressure disk. From this point on, when the clutch is being newly engaged (via lowering the pressure in the clutch actuator) the pressure disk movement back into the direction of the engine flywheel, starts to immediately to build up significant contact force against the clutch disk in order to overcome the frictional resistance force of the polluted spline. Note that the clutch is now compressed only at one side, thus only half the torque is being generated. This is different from the formula given above, which can be considered a further disturbance of the intended closing behavior. Even more cumbersome is the fact that the clutch torque is being built up way earlier than the clutch control software anticipates, which may trigger an initial shock or pulse in the poorly damped driveline when the master clutch controller orders an engagement action with very "jerky" or "unsmooth" drive-off as a result.

With a learning algorithm that is pressure sensor based, information of the lower part of the hysteresis curve is not influenced significantly by the friction on the polluted spline because during the relieve of the clutch integrated cushion springs only micro-motions (<< 1 mm) of the clutch disk over the spline are present. When in addition to this control system improvement, also care is taken by the learning routine that the clutch pressure plate is not retrieved too much below the touch point (which can be done via proper and accurate control of the position of the ConAct actuator) also the re-engaging process of the clutch will be significantly less affected by frictional sliding forces related to pollution on the splines. In addition to this also information from the distinct and clearly detectable higher parts of the measured hysteresis curve (well beyond the non-linear touchpoint region) can be used as a reliable indicator for determining the clutch closing and opening characteristics to further improve the robustness and accuracy of the learning of the touchpoint curve.

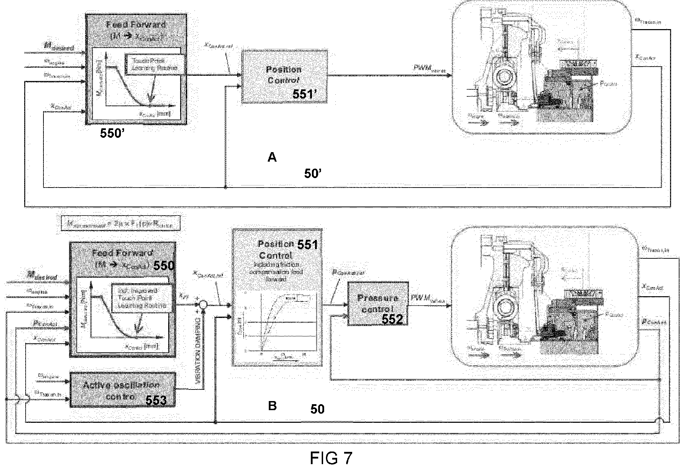

Figure 7 shows the inventive principle in an exemplary control scheme, which is a distinction from a conventional control scheme. In the conventional control scheme, illustrated under Figure 7A, the position control loop 551 that uses feedback information of the measured actuator position receives set points from a master controller 550 in which the learned touch point curve (according to the conventional method of Figure 4) is implemented as a feed forward block to directly compute a desired actuator position as function of desired clutch engaging torque. According to an aspect of the invention, as shown in Figure 7B, the position control system 551 is being fed by a set point generator 550 in the master controller that is provided by the proposed improved touchpoint learning routine discussed in Figure 6, that includes calculating one or more touchpoints of the friction engagement based on sensed working pressures of the pressure sensor during the working stroke. More specifically, as further disclosed hereabove via determination of the average value of the upper and lower friction hysteresis boundaries, in contrast to the method of the conventional learning routine that concentrates on clutch engagement actions in the non-linear touchpoint region only and only relying on learning results from clutch accelerations tests in disconnected gear box condition. The control system 50' concept of Figure 7A may be summarized as a cascaded control strategy that is based on a master controller 550' that computes a desired actuator position as input for a slave controller 551' that on his turn controls the actual position of the clutch actuator. Due to the fact that m a position sensor is available to monitor the pneumatic actuator motion only a fairly simple feedback control system may be applied as inner slave loop with which limited performance can be achieved. This setup relies heavily on the feed forward block that is incorporated in the master controller using information from the clutch learning routine as previously discussed.

The indicated master position control block 550' receives information e.g. from a gearbox control system (not shown) that requests for a certain clutch torque $M_{desired}$ to be adjusted according to actual gears to be selected, changing driving speed conditions and the engine torque to be transmitted. Also safety monitoring functions like monitoring of clutch heat and prevention of excessive long duration clutch slip (related to prevent a burning clutch) may be part of this overarching system. The indicated position control system 551' directly controls the solenoid valves via PWM of the solenoid electrical current. Next to the actuator position, also the input shaft speed is available as a sensor signal in the clutch control system which amongst others is used for estimation of the acceleration torques during activation of the explained touch point learning routine.

In contrast, Figure 7B illustrates a control mode wherein the controller 550, for controlling actuation of the clutch comprises a further pressure controller 552 that receives set points from the position controller 551 which has been upgraded in comparison to the position controller 551 of Figure 7A. To this end controller 550 comprises a feed forward control loop that controls a stroke translation setpoint of the position controller 551 that provides desired stroke translation setpoints on the learned friction hysteresis curves as explained in Figure 6. To this end a pressure sensor is added to the setup of the pneumatic actuator system. This pressure sensor information can also be used as additional feedback control information for the proposed cascaded pressure slave controller 552 that may control pressure valves 55 of the pressure supply mechanism via PWM of the solenoid electrical current. This pressure slave controller 552 is added to the system with the objective to improve the bandwidth and accuracy of the position system significantly. The position control system 551 may now be upgraded in comparison to the control system of the state-of-the-art with an additional feed forward loop to compensate for the friction forces acting in the clutch actuation system, i.e. where position controller 551, for controlling actuation of the clutch comprises a feed forward control loop that compensates for friction hysteresis between coupling and decoupling working strokes. This specific feed forward information may be learned by the enhanced learning routine that is implemented in controller 550 of master controller 50 and where information from the pressure sensor 155 can be used. As mentioned in the pressure and position controlled actuation, now "small position correction" loops, as indicated in the hysteresis loop of Figure 5, can be performed for calculating a desired pressure offset to quickly jump from upper to lower friction boundary (and vice versa) during corrective position control actions, forth and back. Specifically incorporating this friction hysteresis information into the position controller 551 is an important measure to deal with the fairly high friction levels that are present in the delicate touch point region of the clutch system and where the clutch actuation and driveline system is most sensitive to initiate 'judder'. For instance, in a position control system with a fast reacting feedback loop 553 active oscillation control can be performed during closing of the clutch, e.g. by a quick jump-up pressure control command $\Delta p_{open}$ that can be sent to the fast reacting pressure controller resulting in the effect that the actuator will shortly return its way back in opening direction. As soon as the position correction backwards ($\Delta x_{open}$) is completed, the actuator may continue its journey back again into closing direction. From here on the cycle may repeat: a quick jump-down delta pressure control command ($\Delta p_{close}$) may be sent to the pressure controller and when this new threshold is reached the position controller repeats the actuation of the piston in closing direction until an eventual new correction at $\Delta x_{close}$ is required. A mean pressure value in the inner hysteresis loop may be derived from pressure values measured from both a coupling and a decoupling working stroke, in particular, from pressure values obtained at corresponding stroke translation values, where $\Delta x_{open}$ and $\Delta x_{close}$ approach zero and $\Delta p_{open}$, $\Delta p_{close}$ approach a limit value from which the mean pressure can be calculated. With the pressure control according to the invention, it is thus possible to carry out small corrections in back and forth direction, since the friction hysteresis is included as feed forward block in the position control loop to directly generate set points for desired pressure to the pressure slave controller.

The active oscillation feedback loop 553 has the objective to actively supress any unforeseen judder that may still happen in a poorly damped driveline by an oscillation control circuit 553 that adjusts a stroke translation setpoint in dependence of a sensed slip. Thus by feedback information from the gearbox an instability in the driveline can be dampened by adjusting the setpoint. Note that sensor data on gearbox input shaft speed and actual engine speed are available in the system. The difference of these two signals equals the actual clutch slipping speed. Multiplying this slipping speed signal with a (damping) gain and adding it to the control command that comes out of the master controller as set-point for the position controller, results in adding active driveline damping, greatly enhancing the overall stability and ultimately eliminating any risk on judder.

With regard to maximizing the performance of the shown cascaded pressure controller 552 it is beneficial to also include a feed forward structure here to directly compute the needed solenoid currents in the control valves as function of desired actuator position, speed and pressure. This can be done on the basis of the gas law of Gay Lussac:

$$p \times V = m \times R \times T$$

where T refers to gas temperature and "m" is an indication for the amount of gas molecules that are present in the working chamber of the actuator. With information from the actuator position and differentiating the position command that is used as input for the position control system to time, the desired piston speed can be computed. Gathering all these information sources, the desired gas mass flow m' to be pumped into or let out of the actuator can be derived. Via a so-called pneumatic orifice equation, immediately a target set point as feedforward for the desired solenoid currents (or positions: open or close) can be estimated. The following formula for computing the discharge (= mass flow of a gas medium) of air through an orifice applies:

$$W = 0.5303 \frac{ACp_1}{\sqrt{T_1}}$$

where

$W$ = discharge in lbs per second
$A$ = area of orifice in square inches
$C$ = coefficient of flow
$p1$ = upstream pressure in lbs per square inch, absolute
$T1$ = upstream air temperature in °K

Accordingly, pressure controller 552 may be provided with a feed forward loop that controls a mass flow setpoint calculated by a pneumatic orifice equation. In this setup, by estimating a desired gas flow to the actuator an ideal opening position of the orifice can be controlled.

It is also noted that pressure control is preferably provided applying high bandwidth proportional pneumatic control valves, e.g. of the type as disclosed in EP2897822, instead of the combination of multiple on/off solenoid switching valves as applied in the state-of-the-art in gear box clutch control systems. Through proper and advanced pressure control a high bandwidth and control accuracy pressure control system is available that may outperform comparable hydraulic control systems (with limited pump performance and strongly non-linear valve behaviour), which can be achieved in a commercial vehicle where a big pneumatic energy buffer (note that large volume air vessels are needed as buffer for the brake systems, pressurized at levels ranging between 9 and 12 bar) is always readily available to pump pressure into the working chamber of an actuator.

Of course, this description is deemed to disclose any one of the above embodiments or processes in combination with one or with one or more other embodiments or processes to provide even further improvements in finding and matching users with particular personalities, and providing relevant recommendations. Finally, the above-discussion is intended to be merely illustrative of the present system and should not be construed as limiting the appended claims to any particular embodiment or group of embodiments. Thus, while the present system has been described in particular detail with reference to specific exemplary embodiments thereof, it should also be appreciated that numerous modifications and alternative embodiments may be devised by those having ordinary skill in the art without departing from the broader and intended spirit and scope of the present system as set forth in the claims that follow. The specification and drawings are accordingly to be regarded in an illustrative manner and are not intended to limit the scope of the appended claims.

In interpreting the appended claims, it should be understood that:

a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same or different item(s) or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise; and
h) no specific sequence of acts or steps is intended to be required unless specifically indicated.

**Claims**

1. Clutch system (10) for coupling torque of an engine towards a drive system, comprising:

   - a pressurizable clutch arrangement comprising:

      - a clutch disk (200) and clutch pressure plate (260) to be coupled for transmitting the drive torque from the engine towards the drive system, and
      - a pneumatic clutch actuator system (100) for actuating the clutch pressure plate (260) in and out of coupling engagement with the clutch disk (200); said pneumatic actuator system (100) having a working stroke that, upon pressure release, is arranged to control a relative coupling distance of the clutch pressure plate (260) in increasing friction engagement with the clutch disk (200), until, in fully released condition, the clutch disk (200) is fully coupled to the clutch pressure plate (260);

      - a pressure supply mechanism (55, 60) for pressuring the clutch arrangement, in order to couple the clutch arrangement;
      - a pneumatic pressure sensor (155), for sensing a working pressure of the clutch arrangement, during the working stroke;
      - a controller (50), for controlling actuation of the pneumatic clutch actuator system (100), wherein the controller (50) is provided with a calculation module (550), that calculates one or more touchpoints of the friction engagement based on sensed working pressures of the pneumatic pressure sensor (155) during the working stroke, **characterized in that** a touchpoint is calculated from a mean pressure value derived from an inner hysteresis contour of the pressure map of sensed pressures in the coupling and decoupling working strokes.

2. Clutch system (10) according to claim 1, wherein additionally a translation sensor (154) is provided that measures a stroke translation of the working stroke, wherein the controller (50) calculates a touchpoint by relating a sensed stroke translation to a sensed working pressure.

3. Clutch system (10) according to claim 2, wherein the sensed stroke translation and working pressure are measured in both coupling and decoupling working strokes.

4. Clutch system (10) according to any preceding claim wherein the mean pressure value is derived from pressure values measured from both a coupling and a decoupling working stroke, in particular, from pressure values obtained at corresponding stroke translation values.

5. Clutch system (10) according to any preceding claim, wherein the mean pressure value is derived from pressure values measured from both a coupling and decoupling working stroke, in particular, from pressure values obtained at corresponding calculated clutch slipping torque values.

6. Clutch system (10) according to any preceding claim, wherein the calculation module (550) calculates a touchpoint function that calculates the touchpoint as a function of sensed working pressure.

7. Clutch system (10) according to claim 6, wherein the calculation module (550) updates the touchpoint function during coupling and decoupling of the pneumatic clutch actuator system (100).

8. Clutch system (10) according to any preceding claim, wherein the calculation module (550) calculates a mean value from coupling and decoupling working strokes that have a stroke velocity below a set velocity limit.

9. Clutch system (10) according to any preceding claim, wherein the controller (50) for controlling actuation of the pneumatic clutch actuator system (100) comprises a feed forward control loop and a position controller (551) that controls the pressure supply mechanism (55, 60), which feed forward loop controls a stroke translation setpoint of the position controller (551) that controls the pressure supply mechanism (55, 60) in a feedback loop based on a measured stroke translation relative to the stroke translation setpoint.

10. Clutch system (10) according to claim 9, wherein the position controller (551), for controlling actuation of the clutch comprises a feed forward control loop that compensates for friction hysteresis between coupling and decoupling working strokes.

**11.** Clutch system (10) according to claim 9 or 10, wherein the pressure supply mechanism (55, 60) comprises a pressure controller (552) with a feed forward loop that controls a mass flow setpoint calculated by a pneumatic orifice equation.

**12.** Clutch system (10) according to any preceding claim 9-11, wherein the controller (50) further comprises an oscillation control circuit (553) that adjusts a stroke translation setpoint of the position controller in dependence of a sensed slip.

**13.** Clutch system (10) according to claim 11 or 12, wherein the pressure controller (552) comprises a valve device comprising at least a first valve having a valve outlet coupled to the pneumatic clutch actuator (100) and a valve inlet communicatively coupled to the pressure supply (55, 60), and further comprising

◦ a valve seat comprising a sealing edge and valve member comprising a sealing face; the sealing face being pressed in normally closed condition against the sealing edge by an elastic force means; so that in use, an inlet pressure is exerted on the valve member via the valve seat orifice, so that an outlet pressure counteracts on the valve member; the valve member being subject to force generated by a pressure difference between inlet and outlet on an effective area of the sealing face defined by the sealing edge; and
◦ an electric actuator mechanically coupled to the valve member having a continuously variable force set point so as to define, by the pressure controller, a set force counteracting the elastic force, to generate, by control of the force set point; a set pressure difference between the inlet and outlet derived from the pressure controller irrespective of gas mass flow and gas temperature;
o the valve seat further comprising a support structure distinct from the sealing edge and arranged to providing supporting contact to the sealing face to counteract deformations of the sealing face.

**14.** Clutch system (10) according to any preceding claim, wherein the pneumatic clutch actuator system (100) is a concentric or excentric clutch actuator.


**Patentansprüche**

**1.** Kupplungssystem (10) zum Koppeln des Drehmoments eines Motors an ein Antriebssystem, umfassend:

- eine druckbeaufschlagbare Kupplungsanordnung umfassend:

- eine Kupplungsscheibe (200) und eine Kupplungsdruckplatte (260), die zum Übertragen des Antriebsdrehmoments von dem Motor zu dem Antriebssystem gekoppelt werden, und
- ein pneumatisches Kupplungsbetätigungssystem (100) zum Betätigen der Kupplungsdruckplatte (260) in und aus dem Kupplungseingriff mit der Kupplungsscheibe (200); wobei das pneumatische Betätigungssystem (100) einen Arbeitshub aufweist, der bei Druckfreigabe dazu angeordnet ist, einen relativen Kupplungsabstand der Kupplungsdruckplatte (260) in zunehmendem Reibungseingriff mit der Kupplungsscheibe (200) zu steuern, bis in einem vollständig freigegebenen Zustand die Kupplungsscheibe (200) vollständig mit der Kupplungsdruckplatte (260) gekoppelt ist;

- einen Druckversorgungsmechanismus (55, 60) zum Beaufschlagen der Kupplungsanordnung mit Druck, um die Kupplungsanordnung zu koppeln;
- einen pneumatischen Drucksensor (155) zum Erfassen eines Arbeitsdrucks der Kupplungsanordnung während des Arbeitshubs;
- eine Steuerung (50) zum Steuern der Betätigung des pneumatischen Kupplungsbetätigungssystems (100), wobei die Steuerung (50) mit einem Berechnungsmodul (550) bereitgestellt wird, das einen oder mehrere Berührungspunkte des Reibungseingriffs basierend auf den erfassten Arbeitsdrücken des pneumatischen Drucksensors (155) während des Arbeitshubs berechnet, **dadurch gekennzeichnet, dass** ein Berührungspunkt aus einem mittleren Druckwert berechnet wird, der aus einer inneren Hysteresekontur der Druckkarte der erfassten Drücke in den Arbeitshüben des Koppelns und Entkoppelns abgeleitet wird.

**2.** Kupplungssystem (10) nach Anspruch 1, wobei zusätzlich ein Übersetzungssensor (154) bereitgestellt ist, der eine Hubübersetzung des Arbeitshubes misst, wobei die Steuerung (50) einen Berührungspunkt berechnet, indem sie eine erfasste Hubübersetzung zu einem erfassten Arbeitsdruck in Beziehung setzt.

**3.** Kupplungssystem (10) nach Anspruch 2, wobei die erfasste Hubübersetzung und der Arbeitsdruck sowohl im Arbeitshub des Koppelns als auch im Arbeitshub des Entkoppelns gemessen werden.

4. Kupplungssystem (10) nach einem der vorstehenden Ansprüche, wobei der mittlere Druckwert aus Druckwerten abgeleitet wird, die sowohl beim Arbeitshub des Koppelns als auch beim Arbeitshub des Entkoppelns gemessen werden, insbesondere aus Druckwerten, die bei entsprechenden Hubübersetzungswerten erhalten werden.

5. Kupplungssystem (10) nach einem der vorstehenden Ansprüche, wobei der mittlere Druckwert aus Druckwerten abgeleitet wird, die sowohl bei einem Arbeitshub des Koppelns als auch bei einem Arbeitshub des Entkoppelns gemessen werden, insbesondere aus Druckwerten, die bei entsprechenden berechneten Werten des Kupplungsrutschmoments erhalten werden.

6. Kupplungssystem (10) nach einem der vorstehenden Ansprüche, wobei das Berechnungsmodul (550) eine Berührungspunktfunktion berechnet, die den Berührungspunkt als eine Funktion des erfassten Arbeitsdrucks berechnet.

7. Kupplungssystem (10) nach Anspruch 6, wobei das Berechnungsmodul (550) die Berührungspunktfunktion während des Koppelns und Entkoppelns des pneumatischen Kupplungsbetätigungssystems (100) aktualisiert.

8. Kupplungssystem (10) nach einem der vorstehenden Ansprüche, wobei das Berechnungsmodul (550) einen Mittelwert aus Arbeitshüben des Koppelns und Entkoppelns berechnet, deren Hubgeschwindigkeit unterhalb einer vorgegebenen Geschwindigkeitsgrenze liegt.

9. Kupplungssystem (10) nach einem der vorstehenden Ansprüche, wobei die Steuerung (50) zum Steuern der Betätigung des pneumatischen Kupplungsaktorsystems (100) eine Vorsteuerschleife und einen Positionsregler (551) umfasst, die den Druckversorgungsmechanismus (55, 60) steuert, wobei die Vorsteuerschleife einen Hubübersetzungssollwert des Positionsreglers (551) steuert, der den Druckversorgungsmechanismus (55, 60) in einer Rückkopplungsschleife basierend auf einer gemessenen Hubübersetzung relativ zu dem Hubübersetzungssollwert regelt.

10. Kupplungssystem (10) nach Anspruch 9, wobei der Positionsregler (551) zum Regeln der Kupplungsbetätigung eine Vorsteuerschleife aufweist, die die Reibungshysterese zwischen dem Arbeitshub des Koppelns und dem Arbeitshub des Entkoppelns kompensiert.

11. Kupplungssystem (10) nach Anspruch 9 oder 10, wobei der Druckversorgungsmechanismus (55, 60) eine Drucksteuerung (552) mit einer Vorsteuerschleife aufweist, die einen durch eine pneumatische Blendengleichung berechneten Massenstromsollwert steuert.

12. Kupplungssystem (10) nach einem der vorstehenden Ansprüche 9 bis 11, wobei die Steuerung (50) ferner eine Oszillationssteuerungsschaltung (553) umfasst, die einen Hubübersetzungssollwert des Positionsreglers in Abhängigkeit von einem erfassten Schlupf einstellt.

13. Kupplungssystem (10) nach Anspruch 11 oder 12, wobei die Drucksteuerung (552) eine Ventilvorrichtung umfasst, die mindestens ein erstes Ventil aufweist, das einen mit der pneumatischen Kupplungsbetätigung (100) gekoppelten Ventilauslass und einen mit der Druckversorgung (55, 60) kommunizierend gekoppelten Ventileinlass aufweist, und ferner umfasst

  ◦ einen Ventilsitz umfassend eine Dichtkante und ein Ventilelement umfassend eine Dichtfläche; wobei die Dichtfläche in einem normalerweise geschlossenen Zustand durch ein elastisches Kraftmittel gegen die Dichtkante gepresst wird; sodass bei Verwendung ein Einlassdruck über die Ventilsitzöffnung auf das Ventilelement ausgeübt wird, sodass ein Auslassdruck dem Ventilelement entgegenwirkt; wobei das Ventilelement einer Kraft ausgesetzt ist, die durch eine Druckdifferenz zwischen Einlass und Auslass auf einer durch die Dichtkante definierten wirksamen Fläche der Dichtfläche erzeugt wird; und
  ◦ eine elektrische Betätigung, die mechanisch mit dem Ventilelement gekoppelt ist und einen kontinuierlich variablen Kraftsollwert aufweist, sodass durch die Drucksteuerung eine Sollkraft definiert wird, die der elastischen Kraft entgegenwirkt, um durch Steuern des Kraftsollwerts eine Solldruckdifferenz zwischen dem Einlass und dem Auslass zu erzeugen, die von der Drucksteuerung unabhängig von dem Gasmassenstrom und der Gastemperatur abgeleitet wird;
  ◦ wobei der Ventilsitz ferner eine von der Dichtkante unterschiedliche Stützstruktur umfasst, und die angeordnet ist, um der Dichtfläche einen Stützkontakt bereitzustellen, um Verformungen der Dichtfläche entgegenzuwirken.

14. Kupplungssystem (10) nach einem der vorstehenden Ansprüche, wobei das pneumatische Kupplungsbetätigungssystem (100) ein konzentrisches oder exzentrisches Kupplungsbetätigungssystem ist.

**Revendications**

1. Système d'embrayage (10) pour coupler le couple d'un moteur vers un système d'entraînement, comprenant :

   - un agencement d'embrayage pouvant être mis sous pression, comprenant :

     - un disque d'embrayage (200) et un plateau de pression d'embrayage (260) devant être couplés pour transmettre le couple d'entraînement du moteur vers le système d'entraînement, et
     - un système d'actionneur d'embrayage pneumatique (100) pour actionner le plateau de pression d'embrayage (260) dans et hors de mise en prise par couplage avec le disque d'embrayage (200) ; ledit système d'actionneur pneumatique (100) ayant une course de travail qui, lors d'un relâchement de pression, est agencé pour commander une distance de couplage relative du plateau de pression d'embrayage (260) en augmentant une mise en prise par friction avec le disque d'embrayage (200) jusqu'à ce que dans un état complètement libéré, le disque d'embrayage (200) soit entièrement couplé au plateau de pression d'embrayage (260) ;

     - un mécanisme de fourniture de pression (55, 60) pour mettre sous pression l'agencement d'embrayage, afin de coupler l'agencement d'embrayage ;
     - un capteur de pression pneumatique (155), pour détecter une pression de travail de l'agencement d'embrayage, pendant la course de travail ;
     - un dispositif de commande (50), pour commander un actionnement du système d'actionneur d'embrayage pneumatique (100), dans lequel le dispositif de commande (50) est pourvu d'un module de calcul (550), qui calcule un ou plusieurs points de contact de la mise en prise par friction sur la base de pressions de travail détectées du capteur de pression pneumatique (155) pendant la course de travail,

   **caractérisé en ce qu'**un point de contact est calculé à partir d'une valeur de pression moyenne dérivée d'un contour d'hystérésis interne de la carte de pressions détectées dans les courses de travail de couplage et de découplage.

2. Système d'embrayage (10) selon la revendication 1, dans lequel en outre un capteur de translation (154) est prévu, qui mesure une translation de course de la course de travail, dans lequel le dispositif de commande (50) calcule un point de contact en reliant une translation de course détectée à une pression de travail détectée.

3. Système d'embrayage (10) selon la revendication 2, dans lequel la translation de course détectée et la pression de travail sont mesurées à la fois dans les courses de travail de couplage et de découplage.

4. Système d'embrayage (10) selon l'une quelconque des revendications précédentes, dans lequel la valeur de pression moyenne est dérivée de valeurs de pression mesurées à la fois sur des courses de travail de couplage et de découplage, en particulier de valeurs de pression obtenues à des valeurs de translation de course correspondantes.

5. Système d'embrayage (10) selon l'une quelconque des revendications précédentes, dans lequel la valeur de pression moyenne est dérivée de valeurs de pression mesurées à la fois sur des course de travail de couplage et de découplage, en particulier de valeurs de pression obtenues à des valeurs de couple de patinage d'embrayage calculées correspondantes.

6. Système d'embrayage (10) selon l'une quelconque des revendications précédentes, dans lequel le module de calcul (550) calcule une fonction de point de contact qui calcule le point de contact en fonction d'une pression de travail détectée.

7. Système d'embrayage (10) selon la revendication 6, dans lequel le module de calcul (550) met à jour la fonction de point de contact pendant un couplage et un découplage du système d'actionneur d'embrayage pneumatique (100).

8. Système d'embrayage (10) selon l'une quelconque des revendications précédentes, dans lequel le module de calcul (550) calcule une valeur moyenne à partir de courses de travail de couplage et de découplage qui présentent une vitesse de course inférieure à une limite de vitesse définie.

9. Système d'embrayage (10) selon l'une quelconque des revendications précédentes, dans lequel le dispositif de commande (50) pour commander un actionnement du système d'actionneur d'embrayage pneumatique (100) comprend une boucle de commande à action directe et un dispositif de commande de position (551) qui commande le mécanisme de fourniture de pression (55, 60), laquelle boucle à action directe commande un point de consigne de translation de course du dispositif de commande de position (551) qui commande le mécanisme de fourniture de pression (55, 60) dans une boucle de rétroaction sur la base d'une translation de course mesurée par rapport au point de consigne de translation de course.

10. Système d'embrayage (10) selon la revendication 9, dans lequel le dispositif de commande de position (551), pour commander un actionnement de l'embrayage, comprend une boucle de commande à action directe qui compense une hystérésis de friction entre des courses de travail de couplage et de découplage.

11. Système d'embrayage (10) selon la revendication 9 ou 10, dans lequel le mécanisme de fourniture de pression (55, 60) comprend un dispositif de commande de pression (552) avec une boucle à action directe qui commande un point de consigne de débit massique calculé par une équation d'orifice pneumatique.

12. Système d'embrayage (10) selon l'une quelconque des revendications précédentes 9 à 11, dans lequel le dispositif de commande (50) comprend en outre un circuit de commande d'oscillation (553) qui ajuste un point de consigne de translation de course du dispositif de commande de position en fonction d'un patinage détecté.

13. Système d'embrayage (10) selon la revendication 11 ou 12, dans lequel le dispositif de commande de pression (552) comprend un dispositif de vanne comprenant au moins une première vanne présentant une sortie de vanne couplée à l'actionneur d'embrayage pneumatique (100) et une entrée de vanne couplée en communication avec la fourniture de pression (55, 60), et comprenant en outre

  ◦ un siège de vanne comprenant un bord d'étanchéité et un élément de vanne comprenant une face d'étanchéité ; la face d'étanchéité étant pressée dans un état normalement fermé contre le bord d'étanchéité par des moyens de force élastique ; de telle sorte qu'en utilisation, une pression d'entrée est exercée sur l'élément de vanne via l'orifice de siège de soupape, de sorte qu'une pression de sortie contrebalance sur l'élément de vanne ; l'élément de vanne étant soumis à une force générée par une différence de pression entre l'entrée et la sortie sur une zone efficace de la face d'étanchéité définie par le bord d'étanchéité ; et
  ◦ un actionneur électrique couplé mécaniquement à l'élément de vanne présentant un point de consigne de force variable en continu de manière à définir, par l'intermédiaire du dispositif de commande de pression, une force de consigne contrebalaçant la force élastique, pour générer, par commande du point de consigne de force ; une différence de pression réglée entre l'entrée et la sortie dérivée du régulateur de pression indépendamment du débit massique de gaz et de la température du gaz ;
  ◦ le siège de vanne comprenant en outre une structure de support distincte du bord d'étanchéité et agencée pour fournir un contact de support avec la face d'étanchéité afin de contrebalancer des déformations de la face d'étanchéité.

14. Système d'embrayage (10) selon l'une quelconque des revendications précédentes, dans lequel le système d'actionneur d'embrayage pneumatique (100) est un actionneur d'embrayage concentrique ou excentrique.

$$f_{0,v} = \frac{1}{2\pi}\sqrt{\frac{k_t}{J_e}} \quad \frac{1}{2\pi}\sqrt{\frac{k_{d,a}}{m_{veh}\cdot r_{wheel}^2 + J_{wheels}}}$$

$$f_{0,e} = \frac{1}{2\pi}\sqrt{\frac{k_t}{J_e + J_g}} \quad \frac{1}{2\pi\cdot i_g\cdot i_d}\sqrt{\frac{k_{d,g}}{(J_e + J_g)}}$$

FIG 1

FIG 2

FIG 3

FIG 4

FIG 5

FIG 6

**Feed Forward**
$(M \rightarrow x_{ConAct})$

$M_{desired}$
$\omega_{engine}$
$\omega_{Traxon,in}$
$x_{ConAct}$

Touch Point
Learning Routine

$M_{touch/ok}$ [Nm]

$x_{ConAct}$ [mm]

**550'**

$x_{ConAct,ref}$

**Position Control**
**551'**

$PWM_{valves}$

$\omega_{Traxon,in}$

$x_{ConAct}$

$p_{ConAct}$

$\omega_{engine}$ $\omega_{Traxon,in}$

**A**

**50'**

$M_{clch,estimated} = 2\mu \times F_F(p) \times R_{clutch}$

**Feed Forward**
$(M \rightarrow x_{ConAct})$ **550**

$M_{desired}$
$\omega_{engine}$
$\omega_{Traxon,in}$
$p_{ConAct}$
$x_{ConAct}$

Incl. improved
Touch Point
Learning Routine

$M_{touch/ok}$ [Nm]

$x_{ConAct}$ [mm]

$x_{FF}$

$x_{ConAct,ref}$

VIBRATION DAMPING

**Position 551
Control**
Including friction
compensation feed
forward

$p_{ConAct,ref}$

**Pressure
control
552**

$PWM_{valves}$

$\omega_{Traxon,in}$

$x_{ConAct}$

$p_{ConAct}$

$\omega_{engine}$ $\omega_{Traxon,in}$

$\omega_{engine}$
$\omega_{Traxon,in}$

**Active oscillation
control 553**

**B** **50**

FIG 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0787923 A
- DE 102013204831
- WO 2017059856 A
- DE 102013201215
- DE 102007024794
- EP 2897822 A